# EUROPEAN PATENT APPLICATION

(11) **EP 3 605 421 A1**
(43) Date of publication of application: **05.02.2020**
(21) Application number: 18771449.8
(22) Date of filing: 20.03.2018
(51) Int. Cl.: G06Q 10/10, A61B 5/103

(54) **COMMUNICATION ANALYSIS DEVICE, MEASUREMENT/FEEDBACK DEVICE USED THEREFOR, AND INTERACTION DEVICE**

(30) Priority: 21.03.2017 JP 2017054727
(71) Applicant: Tokyo Institute of Technology, Tokyo 152-8550 (JP)
(72) Inventor: MIYAKE Yoshihiro, Tokyo 152-8550 (JP); ORA Hiroki, Tokyo 152-8550 (JP)
(74) Representative: Schröer, Gernot H.
(86) International application number: PCT/JP2018/011173
(87) International publication number: WO 2018/174088

(57) **Abstract**

A communication analysis apparatus 2 analyzes communication by multiple participants. A microphone 10 acquires the voices of the multiple participants in the form of audio data S₁. A camera 20 acquires image data S₂ of the multiple participants. An analysis evaluation unit 30 evaluates the communication based on the audio data S₁ and the image data S₂. A feedback unit 40 feeds back the evaluation result obtained by the analysis evaluation unit 30 to the multiple participants 4.

## Description

### [TECHNICAL FIELD]

The present invention relates to a technique for analyzing communication.

### [BACKGROUND ART]

In face-to-face communication such as a meeting or the like, multilayered communication channels based on verbal information and non-verbal information play an important role. As a conventional technique, a system has been proposed in which a camera and a microphone are set on a table or installed in a meeting room or the like so as to monitor communication. With such a conventional technique, an arrangement configured to record video data, audio data, or the like, has been mainstream.

For example, a TV camera apparatus employing a fish-eye lens or a super-wide-angle lens and variable-direction microphone has been disclosed. The TV camera apparatus supports stable tracking of participants even when no audio is generated in a video conference, thereby generating a video conference video image with a sense of activity. This arrangement provides a high-quality, realistic video conference with low noise and low echo.

### [Related Art Documents]

### [Patent Documents]

[Patent document 1]
Japanese Patent Application Laid Open No. H11-331827

### [DISCLOSURE OF THE INVENTION]

### [PROBLEM TO BE SOLVED BY THE INVENTION]

As described above, such a conventional apparatus remains at a level of only monitoring or recording communication in a passive manner. That is to say, such a conventional apparatus by no means actively intervenes in communication. In other words, such a conventional apparatus by no means has an effect on a meeting.

The present invention has been made in view of such a situation. Accordingly, it is an exemplary purpose of an embodiment of the present invention to provide a communication analysis apparatus configured to intervene in communication. Also, it is another purpose of an embodiment of the present invention to provide a measurement/feedback apparatus configured to measure communication and to feed back the evaluation result.

### [MEANS TO SOLVE THE PROBLEM]

An embodiment of the present invention relates to a communication analysis apparatus structured to analyze a communication by multiple participants. The communication analysis apparatus comprises: a microphone structured to acquire voices of the multiple participants in the form of audio data; a camera structured to acquire image data of the multiple participants; an analysis evaluation unit structured to evaluate the communication based on the audio data and the image data; and a feedback unit structured to provide an evaluation result obtained by the analysis evaluation unit or otherwise a feedback based on the evaluation result to the multiple participants in a real-time manner.

With this embodiment, the communication can be analyzed in a real-time manner. Furthermore, the analysis result can be fed back to the participants in a real-time manner. This provides improved quality of communication.

Also, the feedback unit may present a rhythm shared by the multiple participants. Such a rhythm is hidden at the site of face-to-face communication. It is difficult for individual participants to perceive such a rhythm visually or otherwise audibly. By extracting this rhythm from the site of face-to-face communication, and by re-presenting the extracted rhythm emphasized in the form of a visual stimulus, an auditory stimulus, or a somatosensory stimulus at the site of face-to-face communication, this arrangement allows other participants that have not shared this rhythm to be prompted to synchronize with this rhythm.

Also, the feedback unit may be configured as a humanoid robot. Also, the feedback unit may present a rhythm in the form of at least one from among nodding, body language, and gesture.

Also, the feedback unit may present the rhythm to a participant evaluated as having a low participation level.

Also, the feedback unit may present the rhythm to a participant selected based on a mental state evaluation result obtained by the analysis evaluation unit. Examples of the mental states that can be employed as a reference state include the empathy level, the sense of identification level, the agreement level, and the like. By presenting a rhythm to a participant having a negative mental state, such an arrangement allows this participant to change to a positive state with respect to the empathy level, the sense of identification level, or the agreement level. It should be noted that, in the present specification, a state in which the empathy level, the sense of identification level, or the agreement level is low will be referred to as the "negative state". In contrast, a state in which the empathy level, the sense of identification level, or the agreement level is high will be referred to as the "positive state".

The analysis evaluation unit may evaluate the synchronization state among the multiple participants. The synchronization state has a correspondence with the mental state of the participants. Accordingly, in a case in which the synchronization state, which is a physical quantity, is evaluated, the mental state can be evaluated based on the synchronization state. Also, the analysis evaluation unit is not necessarily required to evaluate the mental state. In this case, the analysis evaluation unit may analyze only the synchronization state, which is a physical quantity, and may use the synchronization state as feedback data.

Also, the feedback unit may visualize and may present the evaluation result obtained by the analysis evaluation unit.

Also, the analysis evaluation unit may monitor a body movement for each of the multiple participants. The body movement may include body language, gesture, posture, nodding, etc.

The analysis evaluation unit may monitor the movement of the line of sight for each of the multiple participants. The analysis evaluation unit may monitor the facial expression, transition of the facial expression, the direction of the face, or the like.

Another embodiment of the present invention relates to a measurement/feedback apparatus structured to measure communication by multiple participants. The measurement/feedback apparatus comprises: a microphone structured to acquire voices of the multiple participants in the form of audio data; a camera structured to acquire image data of the multiple participants; an interface unit structured to transmit the audio data and the image data to an external computer, and to receive feedback data based on an evaluation result of the communication from the computer; and a feedback unit structured to present information to the multiple participants.

Also, the camera may be configured as a 360-degree camera. Also, the measurement/feedback apparatus may further comprise a distance measurement sensor structured to measure the distance between it and each of the multiple participants.

It should be noted that any combination of the components described above or any manifestation of the present invention may be mutually substituted between a method, apparatus, and so forth, which are also effective as an embodiment of the present invention.

### [ADVANTAGE OF THE PRESENT INVENTION]

With an embodiment of the present invention, this arrangement is capable of having an effect on communication so as to improve the quality of the communication.

### [BRIEF DESCRIPTION OF THE DRAWINGS]

Fig. 1 is a block diagram showing a communication analysis apparatus according to an embodiment;
Fig. 2 is a diagram showing a measurement/feedback apparatus that forms the communication analysis apparatus;
Fig. 3 is a specific function block diagram showing the communication analysis apparatus;
Fig. 4 is a diagram showing another example of a feedback unit;
Fig. 5 is a diagram showing one frame of image data acquired by a 360-degree camera;
Fig. 6A is a diagram showing a result of a preliminary experiment executed for two subjects, and Fig. 6B is a diagram showing Z values each obtained by applying Fisher's z-transformation to the correspondence coefficient value of the difference in brightness between role A and role B for each of the conditions 1 through 3, and by further applying Bartlett correction;
Figs. 7A and 7B are diagrams showing the results under the synchronous condition and the asynchronous condition, respectively;
Figs. 8A through 8C are diagrams each showing the relation between the empathy level and body movement in face-to-face communication;
Figs. 9A and 9B are diagrams each showing the relation between the empathy level and line of sight movement in face-to-face communication;
Fig. 10 is a diagram showing an experiment using a robot; and
Figs. 11A and 11B are diagrams showing the experiment results executed as shown in Fig. 10.

### [BEST MODE FOR CARRYING OUT THE INVENTION]

Description will be made below regarding the present invention based on preferred embodiments with reference to the drawings. The same or similar components, members, and processes are denoted by the same reference numerals, and redundant description thereof will be omitted as appropriate. The embodiments have been described for exemplary purposes only, and are by no means intended to restrict the present invention. Also, it is not necessarily essential for the present invention that all the features or a combination thereof be provided as described in the embodiments.

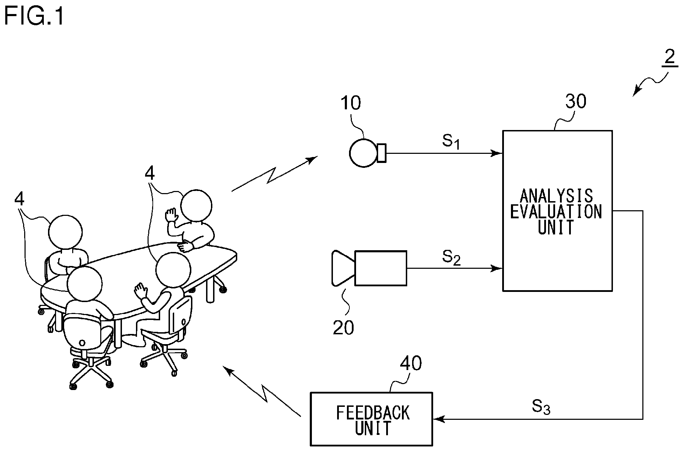

Fig. 1 is a block diagram showing a communication analysis apparatus 2 according to an embodiment. The communication analysis apparatus 2 analyzes a meeting, discussion, lecture, or the like (which will be referred to as "communication" hereafter) with multiple participants, and feeds back the analysis results to the participants.

The communication analysis apparatus 2 includes a microphone 10, a camera 20, an analysis evaluation unit 30, and a feedback unit 40. The microphone 10 acquires the utterances of the multiple participants 4 as audio data S₁. Fig. 1 shows the communication analysis apparatus 2 including a single microphone 10 and a single camera 20. Also, multiple microphones 10 or multiple cameras 20 may be provided. The camera 20 acquires the images of the multiple participants as image data S₂. The analysis evaluation unit 30 analyzes the audio data S₁ and the image data S₂, analyzes the communication performed by the multiple participants 4, and generates an index that indicates the evaluation result. The format of the index is not restricted in particular. The index may be configured as binary data of 1 or 0, or otherwise may be configured as multi-value data. Also, the index may be configured as a vector value.

The feedback unit 40 feeds back the evaluation results S₃ obtained by the analysis evaluation unit 30 to the multiple participants 4. As such a feedback method, an auditory stimulation method, a visual stimulation method, a somatosensory stimulation method, or a combination of them, may be employed. That is to say, such a feedback method is not restricted in particular. For example, in an auditory stimulation method, a beep, an alarm, or predetermined audio data sampled beforehand may be used. Also, a character string may be converted into an acoustic signal (synthesized voice) using a speech synthesizer (voice synthesizer). In a visual stimulation method, an LED, illumination device, or the like, which provides a light-emission state (brightness, color, an emission pattern such as blinking or the like), a display device that displays an image or a text, or a mechanical device, may be employed. Examples of a somatosensory stimulation method include a haptic stimulation method using vibration or pressure, a stimulation method using wind, a stimulation method using temperature, etc. The feedback method or mechanism may be selected according to the aspect of the communication to be evaluated.

The combinations of the aspect of the communication to be evaluated and the feedback method are not restricted in particular. Description will be made below regarding examples thereof.

### (1) Participation level of each participant

The participation level represents the level of contribution to communication, which can be analyzed based on verbal information or non-verbal information.

As a simplest method, the frequency or number of utterances may be measured for each participant using the audio data S₁ acquired by the microphone 10. Also, the measurement result may be quantified. As a further improved method, the content of each statement may be analyzed based on linguistic information (statement content) so as to distinguish productive speech from speech unrelated to the meeting or private speech, which is an effective method for calculating the participation level.

The participation level can also be analyzed based on non-verbal information. Specific examples of such non-verbal information include back-channeling, blinking, gaze retention time, body language, gestures, head shaking, trunk swinging, line of sight movement, etc. Such information can be acquired based on the visual appearance of each participant 4. Specifically, the image data S₂ acquired by the camera 20 may preferably be analyzed. Specific examples of such information that can be acquired based on the visual data include nodding off, doing unrelated work, etc.

The kind of non-verbal information affected by a given mental state of a participant can be acquired based on experimental results obtained beforehand, rules of thumb obtained by verification, or learning results. Accordingly, it can be understood that the index that indicates the participation level can be generated based on the verbal information and the non-verbal information.

In addition, examples of such non-verbal information include turn-taking in conversation, sighing, tone of voice, and the like.

Description will be made below regarding feedback examples to be provided after the participation level is evaluated. For example, a beep may be supplied to a participant evaluated as having a low participation level in order to prompt the participant to participate or to make a statement. Also, an indicator such as a lamp or the like may be assigned to each participant. The indicator assigned to the participant evaluated as having a low participation level (otherwise, a participant evaluated as having a high participation level) may be turned on.

In a case in which the participation level is quantified for each participant, the value of the participation level may be displayed in a form that allows each participant to recognize the value of his/her own participation level (and the values of the participation levels of other participants). For example, the brightness or color may be changed according to the value of the participation level.

If a given participant is suspected of napping or doing unrelated work, a stimulus may be applied to such a participant using audio data or an indicator in order to give a warning.

In many communications such as a meeting, in many cases, only particular participants make statements. Conventionally, in many cases, a facilitator also plays the role of prompting all the participants to have a productive meeting, and in some cases, of prompting a particular participant to make a statement. However, in a case in which the facilitator serves in such a role, this has the potential to interfere with the original task of facilitating the meeting. In addition, the judgment of whether or not each participant is involved in communication is left to the subjective judgment of the facilitator.

The communication analysis apparatus 2 according to the embodiment evaluates the participation level, and feeds back the analysis results to the participants, thereby solving such a problem.

Conventionally, in some cases, in a case in which a superior or a senior colleague of the facilitator does not actively contribute to communication, the facilitator can be reluctant to prompt such a superior or a senior colleague to contribute to communication. Otherwise, if such a superior or a senior colleague is prompted by a subordinate or a junior, the superior or the senior colleague can come to be offended. That is to say, the human relationship becomes a bottleneck in improving the quality of communication.

With the communication analysis apparatus 2 according to the embodiment, the apparatus (machine) prompts each participant to contribute without involving human relationships. In a case in which a participant is prompted to contribute by such a machine instead of another participant, the participant readily accepts the prompt. From this viewpoint, the communication analysis apparatus 2 has an advantage.

### (2) Mental state of participants

The mental state as used here is an index that represents mental states between individual participants, such as empathy, sense of trust, sense of identification, sense of belonging, sense of reality, consensus or agreement, sense of understanding, interest, etc., which is a higher-level index than the participation level. Such mental states can be quantified using the technique described in International Patent Application (PCT/JP2013/007352) filed by the present applicant. Specifically, an index that indicates such a mental state can be generated based on verbal information and non-verbal information.

For example, the interest level, the agreement level, the empathy level, etc. with respect to the statement of a given participant may be detected based on movements such as back-channeling, nodding, or the like, which can be analyzed based on the audio data S₁ and the image data S₂.

As an example, the empathy level, the interest level, or the agreement level can be quantified based on the degree of synchronization (synchronization level) between the movements of a presenter (speaker) and other participants (listeners). For example, the interest level, agreement level, or empathy level may be quantified based on the synchronization level with respect to nodding, body language, gesture, posture, or facial expression between the presenter and the other participants.

As a result of measurement of the nodding of a speaker and listeners, it is known that, when there is an empathetic state between a speaker and listeners, the listeners tend to nod slightly (several hundred ms) before the speaker. In contrast, when there is a non-empathetic state between a speaker and listeners, the listeners tend to nod slightly (several hundred ms) after the speaker. Accordingly, as an example, the empathy level can be detected based on the relation between the empathy level and the nodding timing (phase).

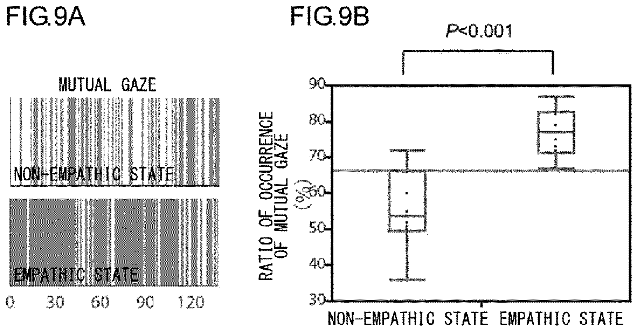

Directing attention to the lines of sight of two participants in face-to-face communication, it is known that there is a significant difference in the line of sight movement of the two participants between a situation in which there is an empathetic state between them and a situation in which there is a non-empathetic state between them (Fig. 9). Accordingly, in an example, the empathy level can be detected based on the line of sight movement of the participants.

In a case in which the mental state is evaluated, feedback information as described below may be supplied. For example, a presenter may be notified of a value of a mental state index (interest level, agreement level, or the like) of the multiple participants. Also, the presenter may be notified of an average value of the mental state index values of all the participants. Also, the presenter may be notified of an index value of each individual participant in a form associated with the corresponding participant.

With this, the presenter is able to understand the interest level, empathy level, or the like, of the participants based on the index value received as a notification, which can be used as feedback for the next statement and presentation, thereby improving the quality of communication.

The feedback method is not restricted to the notification of the index value. For example, as the feedback method, a visual stimulation method may be employed. Examples of such a visual stimulation method include: a method in which the empathy level is represented by the color type or color depth; and a method in which the empathy level is represented by a change in the lighting state (lighting-on, lighting-off, blinking period).

Also, as the feedback method, an auditory stimulation method may be employed. Examples of such an auditory stimulation method include: a method in which the empathy level is represented by the pitch or the volume of sound; and a method in which the empathy level is represented by a periodic sound rhythm. Also, when the empathy level is high, pleasant music or sound may be output. Also, when the empathy level is low, unpleasant music or sound may be output.

Also, as the feedback method, a somatosensory stimulation method may be employed. Examples of such a somatosensory stimulation method include: a method in which the empathy level is represented by the amplitude or the magnitude of vibration; and a method in which the empathy level is represented by a periodical vibration rhythm.

The feedback unit 40 is provided in order to feed back the mental states or the like of the participants thus acquired. Also, the feedback unit 40 may be used to improve the empathy states of the participants in the future. For example, it is known that the synchronization of physical movement among multiple participants improves the empathy level. Accordingly, the feedback unit 40 may provide the multiple participants with a rhythm in the form of a visual stimulus, an auditory stimulus, a somatosensory stimulus, or a combination thereof. This allows the state of synchronization of the multiple participants to be raised, thereby improving the empathy state.

The rhythm to be provided in this arrangement is preferably extracted from the multiple participants, and is preferably shared by many participants. Such a rhythm seldom becomes apparent at a site of communication. Accordingly, it is difficult for a human being to perceive such a rhythm. However, the communication analysis apparatus 2 is capable of extracting such a rhythm. By making apparent or emphasizing the rhythm thus extracted, and by providing the participants with the rhythm in the form of a visual stimulus, an auditory stimulus, or a somatosensory stimulus, this arrangement allows the participants to synchronize with the rhythm thus supplied even before the participants share the rhythm, thereby improving the state of synchronization.

In an example, the "rhythm shared by multiple participants" may be a rhythm with which the multiple participants are simply physically synchronized. In another example, the "rhythm shared by multiple participants" may be a rhythm with which the participants are synchronized in a positive mental state in addition to such a state in which the multiple participants are simply physically synchronized.

At a site of communication where there are many participants, the one-to-one synchronization level may be evaluated for all pairings of the participants. This evaluation allows a synchronization level matrix to be generated. Furthermore, this arrangement is capable of estimating clusters (groups) of multiple participants associated with each other at a high synchronization level. In this case, a common rhythm with which the participants included in such a particular cluster are synchronized may be extracted. Also, the rhythm thus extracted may be provided to the participants other than those included in the particular cluster.

Also, at a site of communication where there are many participants, the one-to-one mental state (any one of empathy level, sense of identification level, agreement level, or otherwise a combination of them) may be evaluated for all pairings of the participants. This evaluation allows a mental state level matrix to be generated. Furthermore, this arrangement is capable of estimating clusters (groups) of multiple participants associated with each other in a positive mental state. In this case, a common rhythm with which the participants included in such a particular cluster are synchronized may be extracted. Also, the rhythm thus extracted may be provided to the participants other than those included in the particular cluster.

The analysis evaluation unit 30 may analyze and evaluate the emotions of the participants such as emotions of delight, anger, sorrow, pleasure, etc.

The communication analysis apparatus 2 may evaluate multiple items. Also, the communication analysis apparatus 2 may provide feedback for each item.

The above is the basic configuration of the communication analysis apparatus 2.

The present invention encompasses various kinds of apparatuses and circuits that can be regarded as a block configuration shown in Fig. 1, or otherwise that can be derived from the aforementioned description. That is to say, the present invention is not restricted to a specific configuration. More specific description will be made below regarding example configurations and embodiments for clarification and ease of understanding of the essence of the present invention and the circuit operation. That is to say, the following description will by no means be intended to restrict the technical scope of the present invention.

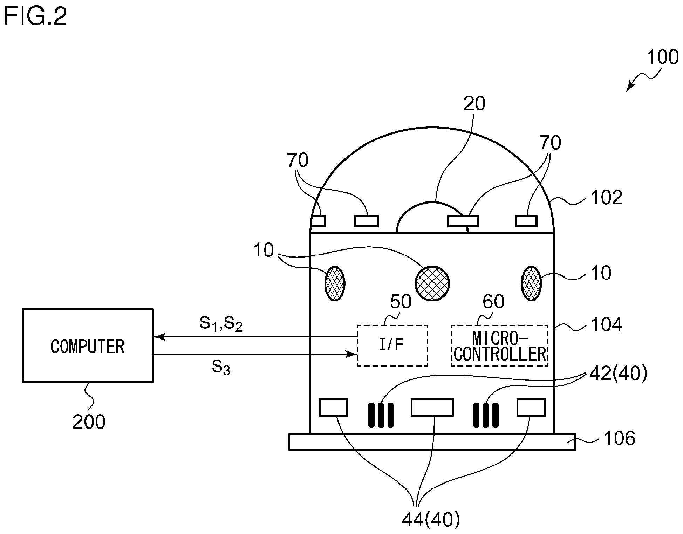

Fig. 2 is a diagram showing the measurement/feedback apparatus 100 that forms the communication analysis apparatus 2. The measurement/feedback apparatus 100 is configured as a device (module) including an interface unit 50 and a signal processing unit 60 in addition to the microphone 10, the camera 20, and the feedback unit 40 shown in Fig. 1, which are arranged in a single housing in the form of a package. The measurement/feedback apparatus 100 is configured to have a table-top size. The measurement/feedback apparatus 10 is placed at a central position in a group of multiple participants participating in communication such as a meeting or the like.

The measurement/feedback apparatus 100 includes a housing 104 having a dome-shaped transparent portion 102 and a base 106 provided to the lower portion of the housing 104. The camera 20 is provided on the inside of the dome-shaped portion 102. The camera 20 is configured as a 360-degree (spherical) camera, which acquires an image of all the participants that surround the measurement/feedback apparatus 100.

Furthermore, multiple microphones 10 are arranged radially in the housing 104. The microphones 10 convert the utterances of the multiple participants into an electrical signal.

The signal processing apparatus 60 is configured as a microcontroller, CPU (Central Processing Unit), FPGA (Field Programmable Gate Array), or the like, for example. The signal processing unit 60 integrally controls the measurement/feedback apparatus 100. For example, the signal processing unit 60 converts an audio signal acquired by the microphones 10 into a digital signal, which is compressed as necessary. Furthermore, the signal processing unit 60 compresses the image data acquired by the camera 20 as necessary.

The interface unit 50 is coupled to an external computer 200 in a wired or wireless manner. The computer 200 corresponds to the analysis evaluation unit 30 shown in Fig. 1. The computer 200 may be configured as a desktop computer or a laptop computer. Otherwise, the computer 200 may be configured as a network server or a cloud computer.

The interface unit 50 may be configured as a Bluetooth (trademark) module, a WLAN module, or a USB module. The interface unit 50 transmits the audio data S₁ and the image data S₂ to the external computer 200.

The measurement/feedback apparatus 100 is provided with a single or otherwise multiple speakers 42 and a single or otherwise multiple indicator lamps 44 as the feedback unit 40 shown in Fig. 1. Also, the feedback unit 40 may be provided with a vibration generating apparatus such as a vibration motor or the like.

The interface unit 50 receives the feedback data S₃ from the computer 200 based on the communication evaluation result. The signal processing unit 60 drives and controls the speaker 42 based on the feedback data S₃, so as to instruct the speaker 42 to output a beep or a sound that corresponds to the feedback data S₃. Furthermore, the signal processing unit 60 drives and controls the indicator lamp 44 based on the feedback data S₃.

Preferably, the measurement/feedback apparatus 100 is further provided with a distance measurement sensor 70 that measures the distance between the measurement/feedback apparatus 100 and each participant. As the distance measurement sensor 70, an optical (laser) distance measurement sensor, an ultrasonic distance measurement sensor, or the like, may be employed. Distance information S₄ that represents the distance between each participant and the measurement/feedback apparatus 100 is transmitted from the interface unit 50 to the computer 200 together with the image data S₂. As described later, the distance measurement information S₄ is used to correct distortion that occurs in the image acquired by the 360-degree camera.

By configuring the components of the communication analysis apparatus 2 other than the analysis evaluation unit 30 shown in Fig. 1 as such a single measurement/feedback apparatus 100 in the form of a package or module, this provides the measurement/feedback apparatus 100 with dramatically improved mobility, and dramatically facilitates the installation thereof. In a case in which such a camera (or microphone) is fixedly installed in a meeting room as its equipment, when the meeting room cannot be used, the communication analysis apparatus 2 cannot be used. In contrast, in a case of employing the measurement/feedback apparatus 100, this dramatically relaxes time restrictions and spatial restrictions, thereby increasing the opportunities to use the communication analysis apparatus 2.

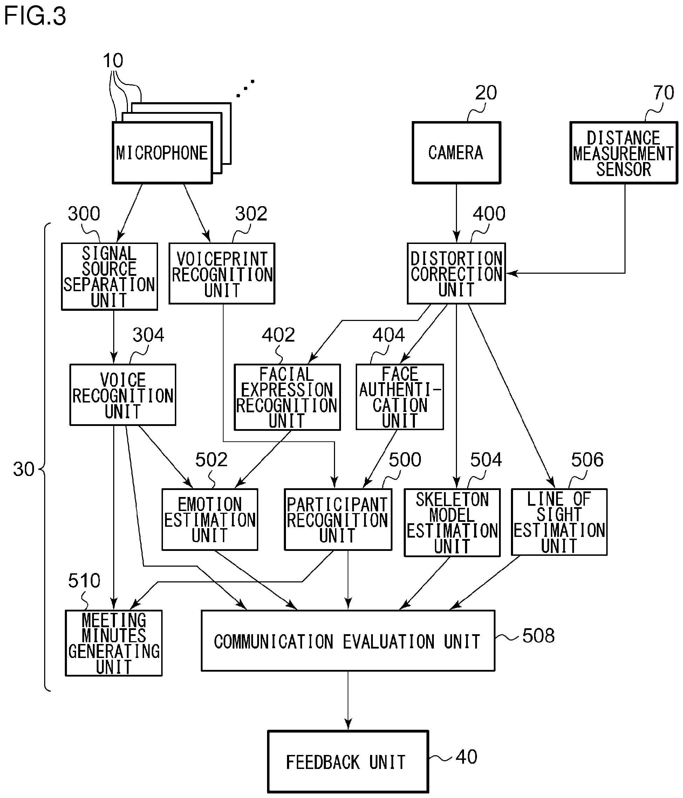

Fig. 3 is a specific function block diagram showing the communication analysis apparatus 2. Each component indicated by a thick frame corresponds to a hardware component. Each thin frame indicates a processing block supported by a software component implemented in the analysis evaluation unit 30.

A distortion correction unit 400 extracts image data of each participant, and corrects the distortion of the image data for each participant based on the distance information that represents the distance up to the corresponding participant measured by the distance measurement sensor 70. The image data thus distortion-corrected is provided to a downstream-stage processing mechanism.

A facial expression recognition unit 402 recognizes the facial expression for each participant. A face authentication unit 404 identifies individual participants based on the image data acquired for each participant.

A signal source separation unit 300 applies blind sound source separation to the audio signals received from the multiple microphones 10, so as to extract utterances for each participant. A voiceprint recognition unit 302 compares the audio signal received from the microphone with a voiceprint acquired beforehand for each participant (pattern matching), in order to identify the individual participants.

A voice recognition unit 304 converts the utterance content acquired based on an utterance into text information or the like.

A participant recognition unit 500 identifies a speaker based on the recognition result obtained by the face authentication unit 404, the identification result obtained by the voiceprint recognition unit 302, lip movement, and the speaker position estimation result.

An emotion estimation unit 502 estimates the emotional state for each participant based on the facial expression recognized by the facial expression recognition unit 402 and the identification result obtained by the voice recognition unit 304.

A skeleton model estimation unit 504 estimates the posture and gestures of a participant based on a skeleton model. A line of sight estimation unit 506 estimates the direction of the line of sight for each participant.

A communication evaluation unit 508 evaluates a communication evaluation index (e.g., participation level, interest level, mental state, described above) or the like based on the utterance content received by the voice recognition unit 304, the emotion information received from the emotion estimation unit 502, the skeleton information (movement information) received from the skeleton model estimation unit 504, the line of sight information received from the line of sight estimation unit 506, or a combination of such multiple information.

A meeting minutes generating unit 510 generates meeting minutes that record the names of participants who made a statement, as well as what each statement was and when each statement was made, based on the text information received from the voice recognition unit 304 and the participants identified by the participant identification unit 500. The meeting minutes further preferably record the evaluation results, which change with time, obtained by the communication evaluation unit 508 in a form associated with the corresponding statement and conversation. By reviewing the meeting minutes after the meeting, this allows themes or statements that attract the interest and attention of each participant to be known. Such information can be used as feedback for the next site of communication.

Description has been made above regarding the present invention with reference to the examples. The above-described examples have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention. Description will be made below regarding such modifications.

### MODIFICATION 1

Description has been made in the embodiment regarding an arrangement in which a single 360-degree camera acquires an image of multiple participants. However, the present invention is not restricted to such an arrangement. Also, multiple cameras may be employed. In this case, the measurement/feedback apparatus 100 may be provided with multiple cameras arranged radially. In a case in which such an arrangement involves little distortion in an image acquired by the cameras, the distance measurement sensor may be omitted.

### MODIFICATION 2

The configuration of the measurement/feedback apparatus 100 in Fig. 2 is shown for exemplary purposes only. That is to say, the present invention is not restricted to such a configuration. For example, the layout of the multiple microphones 10, the layout of the multiple distance measurement sensors 70, the layout of the multiple speakers 42, and the layout of the multiple indicator lamps 44 are not restricted in particular. Also, instead of the multiple microphones 10, one or more variable-directional microphones may be employed.

### MODIFICATION 3

The feedback unit 40 may be configured as a wearable device that can be mounted on each participant. In this case, this allows feedback to be supplied to a desired participant without the awareness of the other participants. Examples of such a wearable device that can be mounted on each participant include: a vibrator that supplies feedback in the form of vibration; an earphone that supplies feedback in the form of sound; a head-mounted display that supplies feedback in the form of a video image, and the like.

### MODIFICATION 4

The microphones 10, the camera 20, and the feedback units 40 included in the communication analysis apparatus 2 are preferably arranged in the single feedback apparatus 100 in the form of a module. However, the present invention is not restricted to such an arrangement. For example, in a case in which the feedback unit 40 is configured as a wearable device, only the microphones 10 and the camera 20 may be mounted on the measurement/feedback apparatus 100.

### MODIFICATION 5

In a case in which the feedback unit 40 is configured as a wearable device, the microphone 10 may be monolithically integrated in the wearable device as a single unit. This arrangement allows each voice to be separated in a simple manner. Furthermore, such an arrangement does not require voiceprint judgement.

### MODIFICATION 6

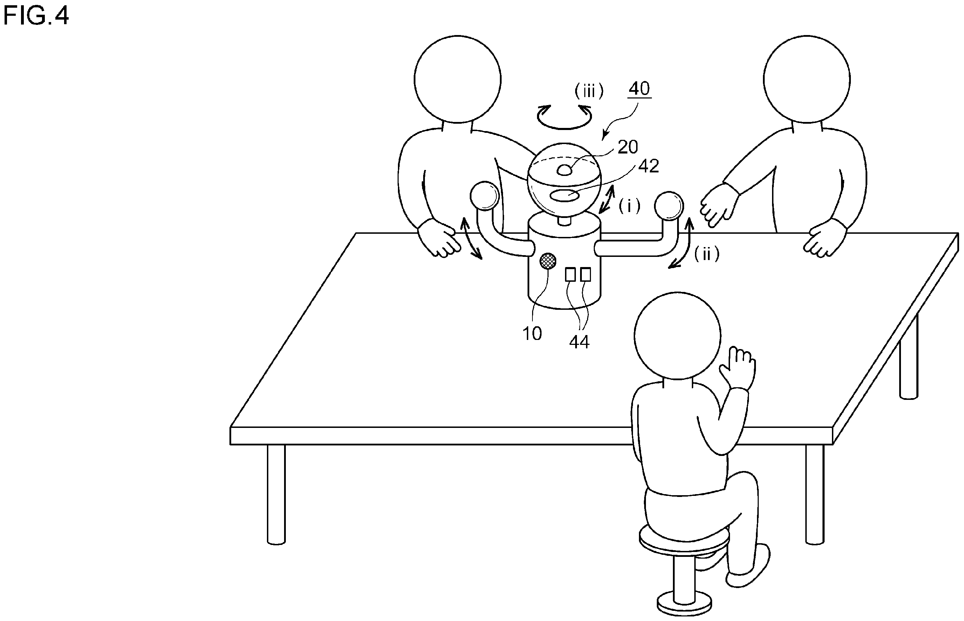

Fig. 4 is a diagram showing another example of the feedback unit 40. The feedback unit 40 is configured as a humanoid robot that is capable of providing body language and gestures. The humanoid robot may be configured to support nodding movement (arrow i) and arm swinging (arm ii). By providing nodding or arm swinging, the humanoid robot may present a rhythm to participants. By synchronizing the participants with the rhythm presented by the humanoid robot, this arrangement allows the empathy level to be improved. The 360-degree camera 20 may be mounted in a head portion of the humanoid robot. Also, the indicator lamps 44 and the speaker 42 shown in Fig. 2 are also provided at suitable portions.

Also, the humanoid robot may be configured such that its body direction or face direction can be changed (arrow iii). Also, the humanoid robot may be controlled such that it faces a speaker. Also, when a given participant is to be cautioned, the humanoid robot may be controlled such that it faces the participant to be cautioned.

In a case in which the feedback unit 40 is configured as a humanoid robot, such an arrangement is expected to provide improved quality of communication as compared with an impersonal visual appearance as shown in Fig. 2.

The feedback unit 40 may be configured such that it can autonomously move. When there is a participant with a low empathy level, the feedback unit 40 may move in front of the participant so as to present a rhythm or the like to the participant.

### MODIFICATION 7

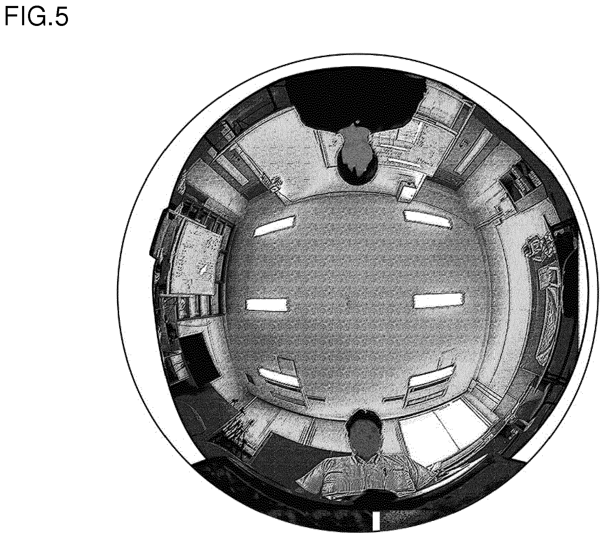

The body movement of the multiple participants may be acquired as follows. That is to say, an image frame acquired by the camera 20 is divided into divided frames for the respective participants 4. Fig. 5 is a diagram showing image data of a single frame acquired by the 360-degree camera. Each divided frame preferably includes a portion of the corresponding participant 4 ranging from the head to the chest. The brightness values are integrated for the divided frames so as to acquire an integrated value in the form of a time waveform. The time waveform is preferably subjected to filtering processing as necessary by means of a lowpass filter. Such an arrangement employs a cutoff frequency on the order of 4 Hz.

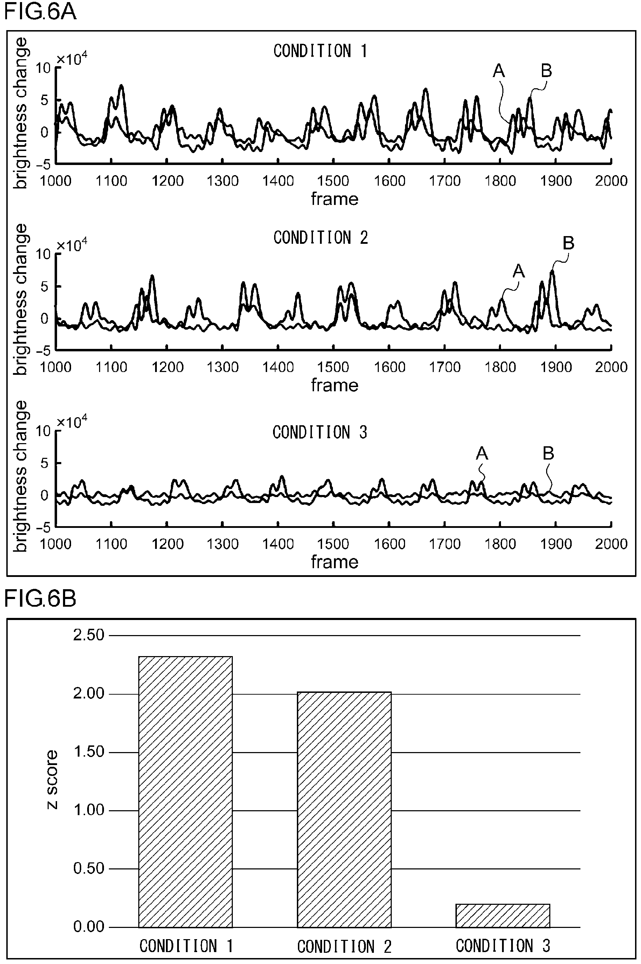

Fig. 6A is a diagram showing a result of a preliminary experiment executed with two subjects. Fig. 6A shows the time waveforms of the integrated brightness values calculated based on the corresponding pair of divided frames measured under different conditions. A role A and a role B are assigned to the two subjects, respectively. The subjects thus assigned to the role A and the role B face each other Intentional body movement is measured under three conditions by means of the 360-degree camera. The subject assigned to the role A nods 100 times with a frequency of 40 times per minute under all the conditions in the measurement. The subject assigned to the role B follows the following conditions.
Condition 1: The subject assigned to the role B nods at the same timing and the same frequency as the role A.
Condition 2: The subject assigned to the role B nods at the same timing as that of the role A and at a frequency half that of the role A.
Condition 3: The subject assigned to the role B does not nod at all.

Fig. 6B shows Z values each obtained by applying Fisher's z-transformation to the correspondence coefficient value of the difference in brightness between the role A and role B, and by further applying Bartlett correction. As can be understood from Fig. 6, an intentional nodding movement appears as a waveform of change in brightness. Based on this result, it can be understood that body movement can be satisfactorily evaluated by measurement using the 360-degree camera and analysis using the method proposed above.

### EXPERIMENT REGARDING BEHAVIOR

In a behavioral experiment, a subject A and a co-participant B (or otherwise C) sit facing each other across a table. In this state, they clap in front of themselves while looking at each other. Two experiment conditions are employed, i.e., a synchronous condition and an asynchronous condition. Each experiment condition is executed for a pair of "A and B" and a pair of "A and C".

In the synchronous condition, the subject A claps in front of his/her face at a frequency of once per second while looking at the face of the co-participant B. In this condition, the co-participant B claps at a timing that is synchronous with the subject A. In the asynchronous condition, the subject A claps in front of his/her face at a frequency of once per second while looking at the face of the co-participant B. In this condition, the co-participant B claps at a timing that is not synchronous with the subject.

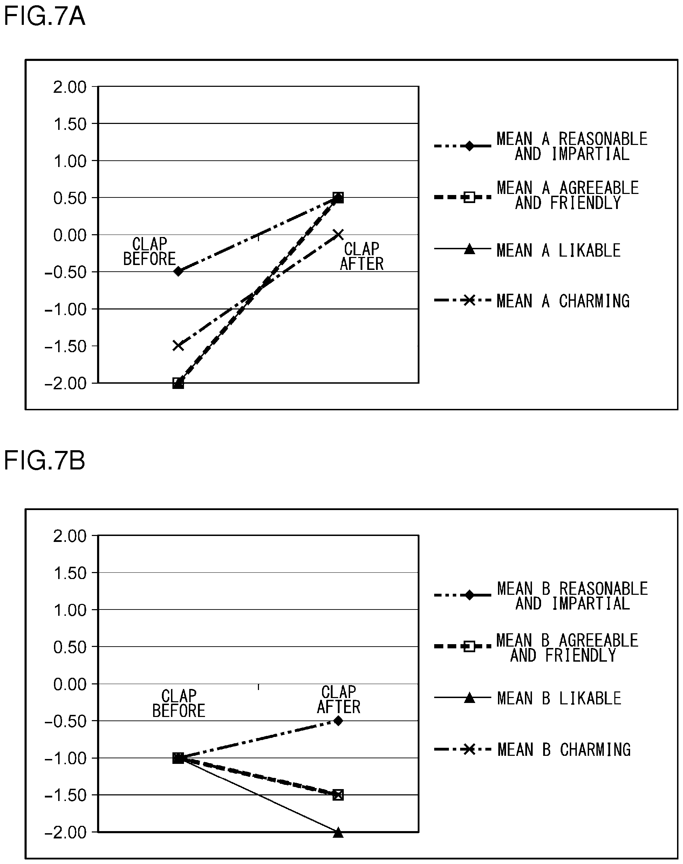

After the experiment, a questionnaire was distributed to the subject A so as to acquire, as answers, the subject's impressions of the co-participant B and the co-participant C, in order to check whether or not the subject A has positive feelings toward the co-participant B, and whether or not the subject A has negative feelings toward the co-participant C. Figs. 7A and 7B are diagrams showing the results under the synchronous condition and the asynchronous condition, respectively.

As shown in Fig. 7A, there was a tendency for the impression to improve under the synchronous condition. In contract, as shown in Fig. 7B, there was a tendency for there to be no effect on the impression under the asynchronous condition.

The behavioral experiment results confirm that, upon presenting a rhythm to participants by the feedback unit 40 described above, the participants can be synchronized with the rhythm, resulting in improving the empathy level of the participants.

### EXPERIMENT REGARDING NODDING

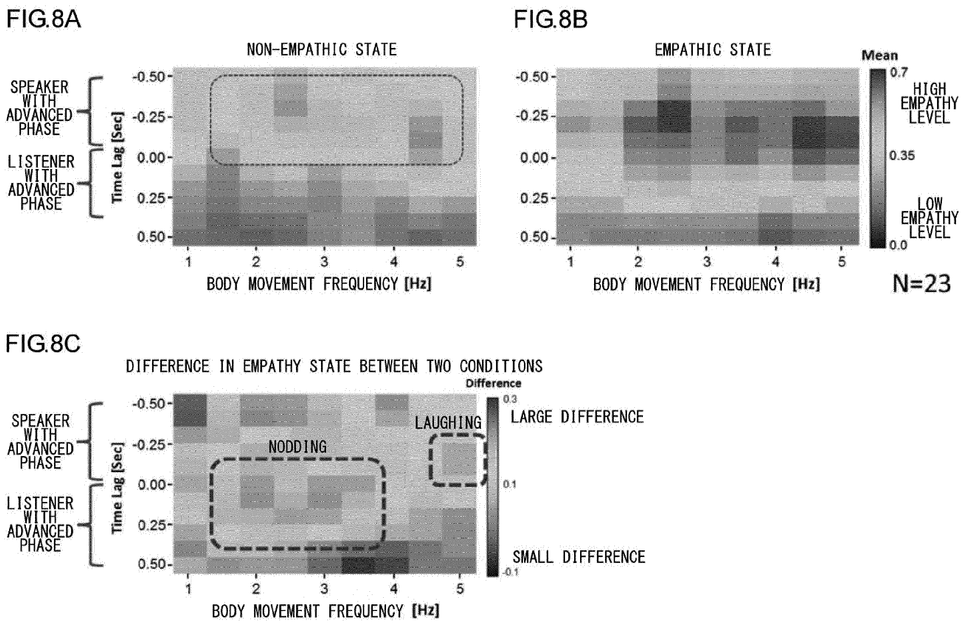

Description will be made regarding an experiment executed by the present inventors with respect to the relation between nodding and the empathy level. Figs. 8A through 8C are diagrams each showing the relation between the empathy level and body movement in face-to-face communication. Body movement was measured by an acceleration sensor. Fig. 8A shows a non-empathic state, and Fig. 8B shows an empathic state. Examples of the body movement shown in Figs. 8A through 8C include laughing and the like in addition to nodding movement, which can be distinguished based on frequency. In this example, the frequency component of 1 through 4 Hz corresponds to nodding. The frequency component of 4 Hz or more corresponds to laughing.

The vertical axis represents the phase difference of body movement. The negative phase correspond to a state in which the speaker involves body movement with an advanced phase. The positive phase corresponds to a state in which the listener involves body movement with an advanced phase. The horizontal axis represents the frequency of nodding movement. Fig. 8C shows a plot of the difference between Figs. 8A and 8B. In Fig. 8C, directing attention to a frequency range of 2 through 4 Hz that represents nodding movement, a large difference is calculated in a region where the phase is positive. That is to say, it can be understood that, when a pair of participants come to be in an empathic state, the nodding movements of the two participants synchronize with each other with the phase of a listener participant advanced as compared with that of a speaker participant.

Based on these findings, the empathic state between two or more participants in face-to-face communication can be evaluated, quantified, or otherwise visualized, based on body movement (including nodding movement).

### EXPERIMENT REGARDING LINE OF SIGHT

Description will be made regarding an experiment executed by the present inventors regarding the relation between the line of sight and the empathy level. Figs. 9A and 9B are diagrams each showing the relation between the empathy level and the movement of the line of sight in face-to-face communication. Fig. 9A is a waveform diagram showing the occurrence of a mutual gaze in a non-empathic state and an empathic state. Fig. 9B shows the ratio of the occurrence of a mutual gaze in the non-empathic state and the empathic state. The experiment results suggest that an empathic state and a mutual gaze have a correspondence with each other. Based on the findings, the empathic state between two or more participants in face-to-face communication can be evaluated, quantified, or otherwise visualized, based on the movement of the line of sight.

### EXPERIMENT REGARDING IMPROVEMENT OF EMPATHY LEVEL USING A ROBOT

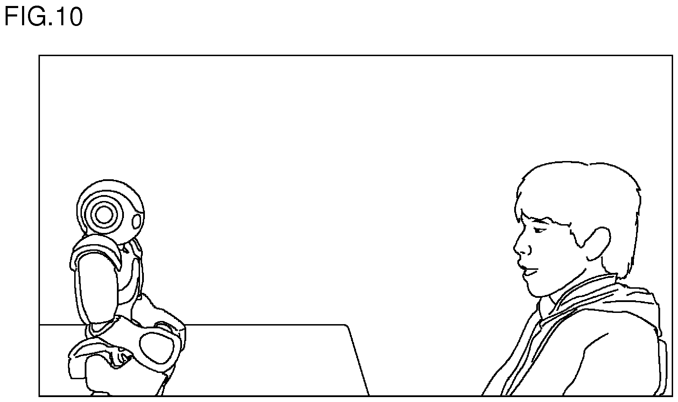

Fig. 10 is a diagram showing an experiment using a robot. The subject and a robot face each other, and the subject speaks to the robot. The robot is switchable between: (i) a state in which the robot does not move at all (no-reaction mode); and (ii) a state in which the robot moves (nods) synchronously with the subject (interactive mode). The two states are each set for five minutes, with an interval of five minutes between them. This experiment was executed with five participants who are each native speakers of Japanese as the subjects. The movement of the robot was controlled with respect to frequency and phase by feedback control so as to synchronize with the movements of the subjects.

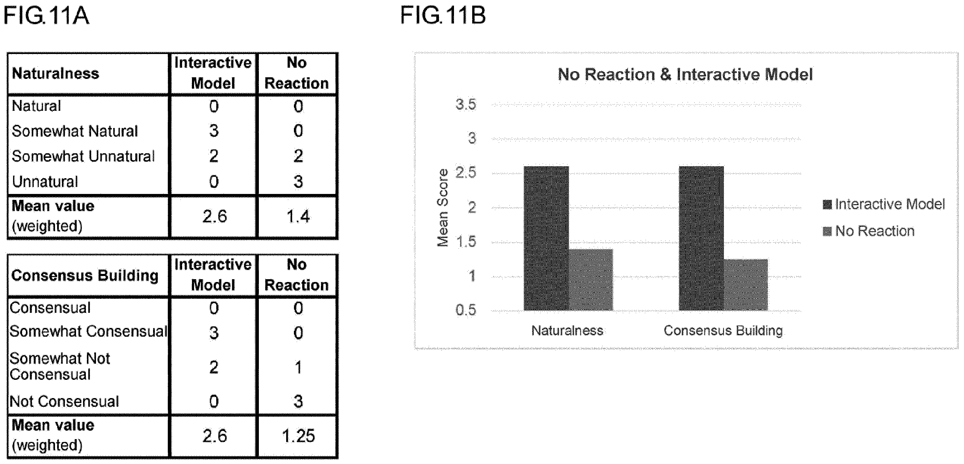

Figs. 11A and 11B are diagrams showing the experiment results executed as shown in Fig. 10. Fig. 11A shows a questionnaire tabulation result. Answers were obtained from the five participants with respect to two items, i.e., "naturalness" and "consensus building". Regarding the naturalness item, in the interactive mode, the answers of three participants were "somewhat natural", and the answers of the other two participants were "somewhat unnatural". In the no-reaction mode, the answers of two participants were "somewhat unnatural", and the answers of the other three participants were "unnatural". Regarding the consensus building item, in the interactive mode, the answers of three participants were "somewhat consensual", and the answers of the other two participants were "somewhat not consensual". In the no-reaction mode, the answer of one participant was "somewhat not consensual", and the answers of the other three participants were "not consensual".

Fig. 11B shows scoring results of weighted averages for each of the two items "naturalness" and "consensus building" in the two modes. The weighting coefficients assigned to "natural", "somewhat natural", "somewhat unnatural", and "unnatural" were set to 4, 3, 2, and 1, in this order. In the same manner, the weighting coefficients assigned to "consensual", "somewhat consensual", "somewhat not consensual", and "not consensual" were set to 4, 3, 2, and 1, in this order. In the interactive mode in which the robot returns a response, higher scores were obtained as compared with those in the no-reaction mode. Based on the experiment results, it can be understood that providing such a humanoid robot at a site of face-to-face communication will improve the empathy level of the participants.

### APPENDIX

Communication is one of the indispensable factors for human beings to lead a social life. In recent years, interest with respect to technology that supports human communication has been growing accompanying the development of wearable device manufacturing technology, artificial intelligence technology, IoT technology, etc.[1, 2, 3]

It is known that the channels used in human communication are roughly classified into two channels, i.e., an explicit channel and an implicit channel.[4] Communication via the explicit channel is mainly supported by language, and its features have been researched in various fields. For example, by employing a model of the brain as working memory, it has been found that linguistic complexity may limit sentence comprehension.[5] Also, a method has been proposed for estimating an emotion state based on linguistic features.[6]

In contrast, communication via the implicit channel is the basis of communication via the explicit channel. Examples of such an implicit channel include posture, nodding, facial expressions, peripheral language, physical distance from the other party, artifacts, etc.[7] It has also been said that non-verbal behavior contributes to human face-to-face communication with a contribution ratio on the order of 65%.[8] Such non-verbal behavior appears unconsciously, and is said to be related to mental states such as emotion, feelings, etc.[9, 10] Examples of such a relation that have been reported include: a relation between fear and peripheral language or the left prefrontal area of the brain [11]; and the relation between the capability of empathizing with pain and brain activity [12].

As a feature of non-verbal communication, a phenomenon has been reported in which, in various kinds of social communications by human beings, the participants thereof synchronize via body movement and peripheral language. Examples include: mothers and infants [13,14]; physicians and patients [15]; teachers and students [16,17]; psychological counselors and clients [18]; and the like.

In recent years, it has been suggested that such synchronization phenomenon is related to psychological effects. Examples include reports on: a relation between body synchronization and satisfaction level with respect to psychological counseling [19,20]; a relation between cooperativeness and empathy by participants in an economic game and their brain responses [21]; and a relation between team atmosphere and cooperativeness and productivity [22].

In addition, the neuroscientific basis that supports the synchronization phenomenon is becoming clear. Examples include reports on: a phenomenon in which the brain responses of participants synchronize with each other in face-to-face communication [23]; and a relation between the synchronization of body movement and the synchronization of brain responses [24]. As described above, it has been suggested that, in verbal and non-verbal communication that can occur in various kinds of social situations or environments, there is a certain level of relation between the occurrence of synchronization and the understanding and sharing of the situation, intentions, and communication contents of the participants in the communication.

Further multifaceted body synchronization phenomenon observation has advanced step by step. Examples of such research include: research with respect to differences in body synchronization between remote communication using a communication device and face-to-face communication [25]; research with respect to the types and timings of physical synchronization [26]; and research in which the kinetic energy of a subject is analyzed by video analysis in order to estimate the body synchronization level [27].

### DOCUMENT LIST

1. The World Economic Forum's Meta-Council on Emerging Technologies, "Top 10 Emerging Technologies of 2016", World Economic Forum, 2016; 13 p.
2. D. Lazer, Alex (Sandy) Pentland, "Life in the network: the coming age of computational social" Science 2009; 323(5915):721-723.
3. A. Barrat, C. Cattuto, "Measuring contact patterns with wearable sensors: methods, data characteristics and applications to data-driven simulations of infectious diseases", Clinical Microbiology and Infection, 2014: 20: 10-16.
4. Tickle-Degnen L, Rosenthal R, "The nature of rapport and its nonverbal correlates" Psychol Inq. 1990;1: 285-293.
5. R. L. Lewis, S. Vasishth, "Computational principles of working memory in sentence comprehension, "Trends in Cognitive Sciences, 2006; 10(10): 447-454.
6. S. Wu, T. H. Falk "Automatic speech emotion recognition using modulation spectral features", Speech Communication, 2011; 53: 768-785.
7. M. Vargus, "Louder than Words - An Introduction to Nonverbal Communication-", Iowa state University Press, 1987; 32 p.
8. R.L. Birdwhistell, "Kinesics and context: Essays on body motion communication", University of Pennsylvania Press 1970; 86-87 p.
9. V.P. Richmond et al., "Nonverbal Behavior in Interpersonal Relations", Allyn and Bacon, Boston: Pearson Education, 2008; 366 p.
10. J.L. Lakin, "Automatic Cognitive Progress and Nonverbal Communication", The SAGE Handbook of Nonverbal Communication, 2006, 59-77.
11. J.S. Morris, S.K. Scott, R.J. Dolan "Saying it with feeling: neural responses to emotional vocalizations", Neuro psychologia 1999; 37, 1155-1163.
12. P. L. Jackson, A. N. Meltzoff, J. Decety "How do we perceive the pain of others? A window into the neural processes involved in empathy", Neurolmage, 2005, 24,771-779.
13. Meltzoff, Moore MK., "Newborn infants imitate adult facial gestures", Child Dev. 1983; 54: 702-709.
14. Bernieri FJ, Reznick S, Rosenthal R. "Synchrony, pseudosynchrony, and dissynchrony: measuring the entrain ment process in mother-infant interaction", Journal of Personality and Social Psychology, 1988; 54: 243-253.
15. Koss T, Rosenthal R, "Interactional synchrony, positivity and patient satisfaction in the physician-patient relationship", Med Care, 1997; 35: 1158-1163.
16. Bernieri FJ, "Coorinated movement and rapport in teacher-student interactions", J Nonverbal Behav, 1988; 12: 120-138.
17. Lafrance M, Broadbent M. "Group Rapport: posture sharing as a nonverbal indicator", Group Organization Studies, 1988; 1: 328-333.
18. Ramseyer F, Tschacher W., "Synchrony: a core concept for a constructivist approach to psychotherapy. Constructivism in the Human Sciences", Constructivism in the Human Sciences, 2006; 11: 150-171.
19. Ramsyer F, Tschacher W., "Nonverbal synchrony of head- and body-movement in psychotherapy: different signals have different associations with outcome" Front Psychol , 2014; 5: 1-9.
20. Komori M, Nagaoka C. "The relationship between body movements of clients and counsellors in psychotherapeutic counselling: a study using the video-based quantification method", Jap J of Cog Psychol. 2010; 8: 1-9.
21. Tania Singer, "Empathic neural responses are modulated by the perceived fairness of others", Nature 2006; 439(26): 466-469.
22. Barsade, SG "The ripple effect: Emotional contagion and its influence on group behavior", Administrative Science Quality, 2002; 47: 644-675.
23. G. J. Stephen, "Speaker-listener neural coupling underlies successful communication", PNAS, 2010; 107(32): 14425-14430.
24. K. Yun, "Interpersonal body and neural synchronization as a marker of implicit social interaction", Scientific Reports 2012; 2: 959.
25. J. Kwon, "Detection of Nonverbal Synchronization through Phase Difference in Human Communication", PLos One, 2015; 10; 1371.
26. M. M. Louwerse, "Behavior Matching in Multimodal Communication Is Synchronized", Cognitive Science, 2012;36: 1404-1426.
27. Y. Hart, "Automated Video Analysis of Non-Verbal Communication in a Medical Setting", frontiers in Psychology, 2016;7: 1130.

Description has been made regarding the present invention with reference to the embodiments using specific terms. However, the above-described embodiments show only the mechanisms and applications of the present invention for exemplary purposes only, and are by no means intended to be interpreted restrictively. Rather, various modifications and various changes in the layout can be made without departing from the spirit and scope of the present invention defined in appended claims.

### [DESCRIPTION OF THE REFERENCE NUMERALS]

2 communication analysis apparatus, 4 participant, 10 microphone, 20 camera, 30 analysis evaluation unit, 40 feedback unit, 42 speaker, 44 indicator lamp, 50 interface unit, 60 signal processing unit, 70 distance measurement sensor, 100 measurement/feedback apparatus, 102 dome-shaped portion, 104 housing, 106 base, 300 signal source separation unit, 302 voiceprint recognition unit, 304 voice recognition unit, 400 distortion correction unit, 402 facial expression recognition unit, 404 face authentication unit, 500 participant recognition unit, 502 emotion estimation unit, 504 skeleton model estimation unit, 506 line of sight estimation unit, 508 communication evaluation unit, 510 meeting minutes generating unit.

### [INDUSTRIAL APPLICABILITY]

The present invention relates to a technique for analyzing communication.

## Claims

1. A communication analysis apparatus structured to analyze a communication by a plurality of participants, the communication analysis apparatus comprising:
a microphone structured to acquire voices of the plurality of participants in the form of audio data;
a camera structured to acquire image data of the plurality of participants;
an analysis evaluation unit structured to evaluate the communication based on the audio data and the image data; and
a feedback unit structured to provide an evaluation result obtained by the analysis evaluation unit or otherwise a feedback based on the evaluation result to the multiple participants in a real-time manner.

2. The communication analysis apparatus according to claim 1, wherein the feedback unit presents a rhythm shared by the plurality of participants.

3. The communication analysis apparatus according to claim 2, wherein the feedback unit is configured as a humanoid robot,
and wherein the feedback unit presents a rhythm in the form of at least one from among nodding, body language, and gesture.

4. The communication analysis apparatus according to claim 2 or 3, wherein the feedback unit presents the rhythm to a participant evaluated as having a low participation level.

5. The communication analysis apparatus according to claim 2 or 3, wherein the feedback unit presents the rhythm to a participant selected based on a mental state evaluation result obtained by the analysis evaluation unit.

6. The communication analysis apparatus according to any one of claims 1 through 5, wherein the analysis evaluation unit evaluates a synchronization state among the plurality of participants.

7. The communication analysis apparatus according to any one of claims 1 through 6, wherein the feedback unit visualizes and presents the evaluation result obtained by the analysis evaluation unit.

8. The communication analysis apparatus according to any one of claims 1 through 7, wherein the analysis evaluation unit monitors a body movement for each of the plurality of participants.

9. The communication analysis apparatus according to any one of claims 1 through 8, wherein the analysis evaluation unit monitors a facial state for each of the plurality of participants.

10. A measurement/feedback apparatus to be installed at a site of a communication by a plurality of participants, the measurement/feedback apparatus comprising:
a microphone structured to acquire voices of the plurality of participants in the form of audio data;
a camera structured to acquire image data of the plurality of participants;
an interface unit structured to transmit the audio data and the image data to an external computer, and to receive feedback data based on an evaluation result of the communication from the computer; and
a feedback unit structured to present information or otherwise a stimulus based on the feedback data to the plurality of participants in a real-time manner.

11. The measurement/feedback apparatus according to claim 10, wherein the feedback unit presents a rhythm shared by the plurality of participants.

12. The measurement/feedback apparatus according to claim 11, wherein the feedback unit is configured as a humanoid robot structured to present the rhythm in the form of at least one from among nodding, body language, and gesture.

13. The measurement/feedback apparatus according to claim 11 or 12, wherein the feedback unit presents the rhythm to a participant evaluated by the computer to have a low participation level.

14. The measurement/feedback apparatus according to claim 11 or 12, wherein the feedback unit presents the rhythm to a participant selected by the computer based on an evaluation result of a mental state.

15. The measurement/feedback apparatus according to any one of claims 10 through 14, wherein the camera is configured as a 360-degree camera.

16. The measurement/feedback apparatus according to claim 15, further comprising a distance measurement sensor structured to measure a distance between it and each of the plurality of participants.

17. An interaction apparatus to be installed at a site of a communication by a plurality of participants, the interaction apparatus comprising:
an input apparatus structured to acquire audio data and/or image data of the plurality of participants;
an analysis evaluation unit structured to extract a rhythm shared by the plurality of participants based on the audio data and/or the image data measured by the input apparatus; and
a feedback unit structured to present the rhythm to at least one from among the plurality of participants.
